Europäisches Patentamt

**European Patent Office**

**Office européen des brevets**

(11) Numéro de publication: **0 029 131**
**B1**

(12) **FASCICULE DE BREVET EUROPEEN**

(45) Date de publication du fascicule du brevet: **15.02.84**

(51) Int. Cl.³: **G 06 F 13/00**

(21) Numéro de dépôt: **80106474.2**

(22) Date de dépôt: **23.10.80**

(54) Procédé de commande de l'affectation de ressources dans un système comportant plusieurs processeurs à fonctionnement simultané.

(30) Priorité: **19.11.79 US 95840**

(43) Date de publication de la demande:
**27.05.81 Bulletin 81/21**

(45) Mention de la délivrance du brevet:
**15.02.84 Bulletin 84/7**

(84) Etats contractants désignés:
**DE FR GB IT**

(56) Documents cités:
**US - A - 3 469 239**
**US - A - 3 886 525**

**IBM TECHNICAL DISCLOSURE BULLETIN, vol. 7, no. 8, janvier 1965, pages 671-675, New York, US, ROBELEN: "Instruction for restricting memory in a shared memory multicomputing system"**
**IBM TECHNICAL DISCLOSURE BULLETIN, vol. 20, no. 11B, avril 1978, pages 5068-5070, New York, US, BANTZ: "Computer interlock mechanism"**

(73) Titulaire: **International Business Machines Corporation**
**Old Orchard Road**
**Armonk, N.Y. 10504 (US)**

(72) Inventeur: **Hays, Daniel O'Connor, Jr.**
**1704 Bellmead St.**
**Raleigh, NC 27607 (US)**
Inventeur: **Maholick, Andrew Walter**
**1506 Baker Rd.**
**Raleigh, NC 27607 (US)**
Inventeur: **Mize, William Nathaniel**
**802 Brookgreen Dr.**
**Cary, NC 27511 (US)**

(74) Mandataire: **Bonneau, Gérard**
**Compagnie IBM France Département de Propriété Industrielle**
**F-06610 La Gaude (FR)**

(56) Documents cités:
**IEEE TRANSACTIONS ON ELECTRONIC COMPUTERS, vol. EC-16, no. 3, juin 1967, pages 320-326. New York, US, RODER: "Memory protection in multiprocessing systems"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Procédé de commande de l'affectation de ressources dans un système comportant plusieurs processeurs à fonctionnement simultané

Domaine technique

La présente invention concerne les systèmes de traitement de données comportant plusieurs processeurs qui fonctionnent simultanément en utilisant des cycles d'horloge à phases complémentaires, et concerne plus particulièrement un procédé de commande de l'affectation exclusive de ressources dans un système comportant plusieurs processeurs à fonctionnement simultané.

Etat de la technique antérieure

Il existe de nombreux systèmes dans la technique antérieure comportant plusieurs processeurs partageant l'utilisation de ressources communes telles que des unités de mémoire. Des conflits peuvent évidemment avoir lieu lorsque deux processeurs désirent en même temps l'accès à une ressource. Ce genre de conflit est généralement résolu par l'utilisation d'un circuit d'arbitrage extérieur aux processeurs. Ainsi, l'article "instruction for Restricting Memory in a Shared Memory Multicomputing System" paru dans l'IBM Technical Disclosure Bulletin, Vol. 7, No. 8, janvier 1965, pages 671—674, décrit un système où le conflit entre plusieurs processeurs désirant l'accès à une section de mémoire commune est résolu par l'exécution d'une opération qui teste et positionne un mot de commande de verrouillage et, en cas de conflit, par la réexécution de cette opération de test, après résolution des priorités à l'aide d'une carte exterieure aux processeurs.

Dans les systèmes qui comportent des processeurs utilisant des cycles d'horloge à phases complémentaires, l'instruction dite de test et positionnement qui est généralement employée aux fins de l'affectation de ressources communes permet d'obtenir un verrouillage efficace de l'utilisation de ces ressources, mais non d'éviter que, ce faisant, des conflits se produisent entre les différents processeurs qui désirent les utiliser. On sait qu'il existe des systèmes interactifs dans lesquels des méthodes et des moyens sont prévus pour résoudre ces conflits. Par exemple, l'invention décrite dans le brevet des E.U.A. No. 3 676 860 permet de résoudre de tels conflits, mais non d'obtenir un verrouillage efficace de l'utilisation d'une ressource fixe par un processeur donné après résolution du conflit.

Il existe d'autre part des dispositifs de commande de verrouillage, tels ceux décrits dans les brevets des E.U.A. No. 3 566 358 et 3 435 418, qui permettent de déterminer à quel moment un processeur donné ou un programme donné associé à un processeur particulier pourra accéder à un enregistrement donné qu'in autre processeur ou qu'un autre programme est en train d'utiliser et qui ne peut donc pas être mis à la disposition du processeur ou du programme demandeur. Ces dispositifs ne permettent toutefois pas de résoudre les conflits éventuels entre processeurs désireux d'utiliser une ressource commune.

D'autre part, la séquence d'instructions dites de comparaison et d'échange décrite notamment dans le brevet des E.U.A. No, 3 866 525 permet de comparer le contenu de divers registres et d'utiliser cette comparaison comme une clé pour commander l'echange du contenu de divers registres ou de différents emplacements spécifiques de mémoires.

Il ressort de ce qui précède qu'aucune des techniques de l'art antérieur ne permet à la fois de résoudre les conflits qui peuvent se présenter, dans un système à processeurs multiples utilisant des cycles d'horloge à phases complémentaires, lorsque plusieurs processeurs désirent avoir accès à une ressource commune, et de verrouiller l'utilisation de cette ressource de telle sorte que seul un processeur donné puisse avoir accès à cette dernière pendant un intervalle de temps déterminé.

Exposé de l'invention

L'objet de la présente invention telle qu'elle est caractérisée dans les revendications est donc un procédé permettant de commander l'affectation de ressources fixes dans un système à processeurs multiples utilisant des cycles d'horloge à phases complémentaires, de manière à verrouiller l'emploi desdites ressources et à résoudre les conflits qui peuvent se produire entre différents processeurs désireux d'acceder auxdites ressources, sans que la résolution desdits conflits exige la mise en oeuvre d'un circuit d'arbitrage ou d'un dispositif approprié tel qu'un mécanisme de résolution de priorité.

La présente invention permet notamment d'atteindre l'objectif ci-dessus grâce à l'emploi d'une méthode permettant d'identifier le processeur particulier qui, à un moment donné, utilise une ressource commune. Etant donné que, dans les systèmes à processeurs multiples qui font appel à l'emploi de cycles d'horloge à phases complémentaires, aucun processeur ne peut accéder de façon exclusive à une ressource commune telle qu'une zone de mémoire, l'invention utilise un procédé servant à commander l'accès à ladite ressource et à verrouiller l'emploi de cette dernière.

Ce procédé consiste à accéder aux bits de commande contenus dans un registre de commande associé à la ressource demandée qui définissent la disponibilité de la ressource, à examiner le contenu du registre de commande afin de déterminer s'il indique que la ressource est disponible, à charger le registre de commande par un code numerique affecté de façon exclusive au processeur demandeur qui désire utiliser la ressource si elle est disponible, à attendre que l'un des cycles du signal d'horloge ait pris fin sand qu'aucune opération destinée à permettre audit processeur d'accéder à la ressource n'ait été effectuée, cycle pendant lequel l'autre processeur pourrait avoir modifié le contenu du registre de commande appliqué audit processeur qui fait suite audit cycle d'attente, cett éventualité étant vérifiée en comparent le code numérique exclusivement affecté au processeur demandeur avec le contenu du registre de commande, pendant le cycle du signal d'horloge appliqué au processeur demandeur qui fait suite au cycle d'attente, à permettre ensuite l'accès à la ressource et l'utilisation de celle-ci si la comparaison effectuée indique une égalité, jusqu'à ce que la tâche désirée ait été exécutée, et à mettre ensuite le contenu du registre de commande à une valeur indiquant que la ressource est à la disposition d'autres processeurs.

Brève description des figures

La Figure 1 représente schématiquement un système de traitement de données comportant deux processeurs et permettant de résoudre les conflits éventuels relatifs à l'utilisation d'une ressource commune constituée, par exemple, par une zone de mémoire à accès sélectif.

La Figure 2 représente un diagramme des temps afférent à un système du type représenté sur la Figure 1.

La Figure 3 représente schématiquement un processeur ainsi que les registres et les dispositifs nécessaires aux fins de la mise en oeuvre du procédé objet de l'invention.

La Figure 4 représente un diagramme des temps afférent au dispositif de la Figure 3.

La Figure 5 représente de façon plus détaillée la logique de commande chronologique 5 de la Figure 1.

Mode de réalisation préféré de l'invention

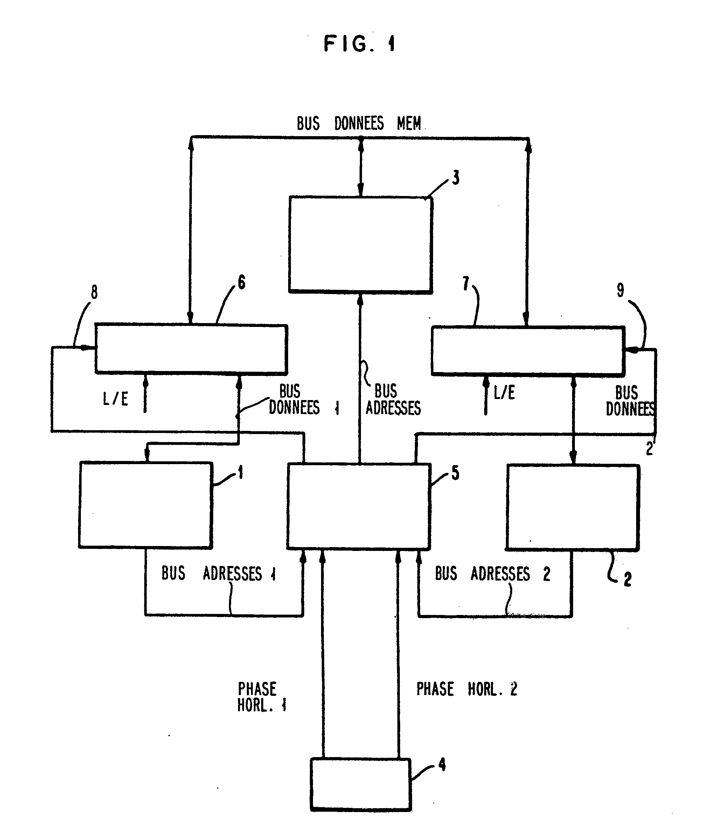

On a schématiquement représenté sur la Figure 1 une réalisation de l'invention dans laquelle des processeurs 1 et 2 partagent, par exemple, une mémoire à accès sélectif 3 dont la vitesse de fonctionnement est le double de celle de l'un ou l'autre de ces processeurs. Une horloge 4, qui peut comporter un oscillateur à quartz et des compteurs, fournit de façon classique, des trains d'impulsions chronologiques appropriés. Ces impulsions sont utilisées par la logique de commande chronologique 5 de la présente invention pour commander par les lignes respectives 8 et 9 des registres d'emmagasinage de données 6 et 7 respectivement associés aux deux processeurs aux fins d'opérations d'accès à la mémoire 3, ces opérations étant du type à chevauchement ou à phases complémentaires. Dans le présent contexte, l'expression ''à phases complémentaires'' est définie comme suit: pendant une première phase d'un signal d'horologe à deux phases fourni par l'horloge 4, un premier processeur tel que le processeur 1 présente une adresse à la mémoire 3; pendant la seconde phase d'un signal d'horloge complémentaire à deux phases, le processeur 1 lit ou écrit des données dans la mémoire 3. Le processeur 2 présente à son tour une adresse pendant la phase 2 du même signal d'horloge et lit ou écrit des données dans la mémoire 3 pendant la phase 1 du signal d'horloge suivant. Ce processus sera décrit ultérieurement de façon plus détaillée à l'aide des diagrammes des temps.

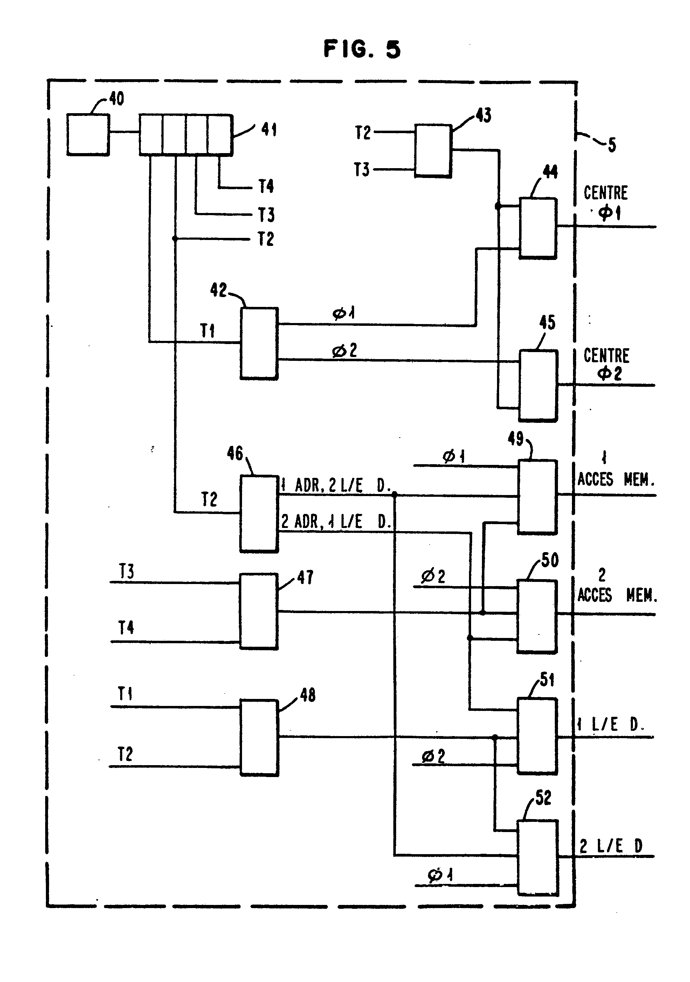

L'élément logique de commande chronologique 5 utilise la chronologie définie par l'horloge 4. Les détails de cette dernière et dudit élément sont représentés sur la Figure 5.

L'horloge 4 comprend un oscillateur 40, qui est en principe un multivibrateur commandé par un cristal de quartz, et qui fait progresser un compteur en anneau 41 à quatre étages, par exemple. Les signaux chronologiques obtenus aux sorties du compteur en anneau 41 sont désignés T1, T2, T3 et T4.

Le signal T1 est employé pour faire changer d'état une bascule binaire 42. La sortie vraie de la bascule 42 est désignée ''phase 1 du signal d'horloge'' (''Ø1'') et sa sortie de complément ''phase 2 du signal d'horloge'' (''Ø2'').

La fonction OU des signaux T2 et T3 est obtenue en appliquant ces derniers aux entrées d'un circuit OU 43, dont la sortie est appliquée à un circuit ET 44 et à un autre circuit ET 45. Le signal obtenu à la sortie vraie (phase 1) de la bascule 42 est appliqué à la seconde entrée du circuit ET 44, à la sortie duquel est alors obtenu un signal indiquant le centre de la phase 1. Le signal obtenu à la sortie de complément (phase 2) de la bascule 42 est appliqué à la seconde entrée du circuit ET 45, à la sortie duquel est obtenu un signal indiquant le centre de la phase 2.

Le signal T2 permet également de faire changer d'état une bascule binaire 46. Lorsqu'un signal est obtenu à la sortie vraie de la bascule 46, cela indique que le premier processeur (1) du système doit présenter son adresse (''1 ADR'') et que le second processeur (2) doit lire ou écrire des données (''2 L/E D'').

Lorsqu'un signal est obtenu à la sortie de complément de la bascule 46, cela indique que le second processeur doit présenter son adresse (''2 ADR'') et que le premier processeur doit lire ou écrire des données (''1 L/E D'').

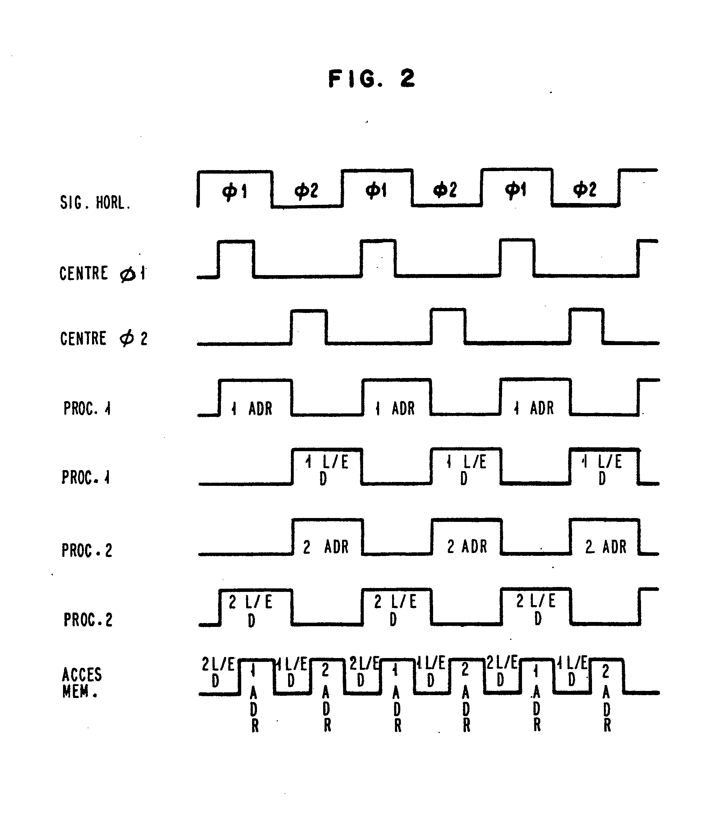

Une chronologie supplémentaire est employée aux fins de la mise en séquence des opérations d'accès spécifiques à la mémoire qui sont effectuées par les processeurs, comme le montre la Figure 2. Sur la Figure 5, les deux circuits OU 48 et 47 permettent respectivement d'obtenir les fonctions logiques OU des signaux T1, T2 et T3, T4. Ces signaux sont utilisés pour accéder à la mémoire, comme l'indique la Figure 2.

Quatre circuits ET, 49 à 52, permettent de déterminer les instants précis où les opérations d'accès à la mémoire et les opérations de lecture ou d'écriture dans cette dernière doivent avoir lieu. Le circuit ET 49 reçoit comme entrées la phase 1 du signal d'horloge, la sortie de la porte OU 47 et la sortie vraie de la bascule 46, et indique l'instant où le processeur 1 peut accéder à l'adresse désirée de la mémoire ("1 ACCES MEM."). Le circuit ET 50 est utilisé de façon analogue, mais reçoit comme entrées la phase 2 de l'horloge, la sortie de la porte OU 47 et l'autre sortie de la bascule 46, et indique l'instant où le second processeur (2) peut accéder à l'adresse désirée de la mémoire ("2 ACCES MEM."). Les circuits ET 51 et 52 déterminent les instants où les processeurs 1 et 2 peuvent procéder à des opérations de lecture ou d'écriture de données (voir Figure 5).

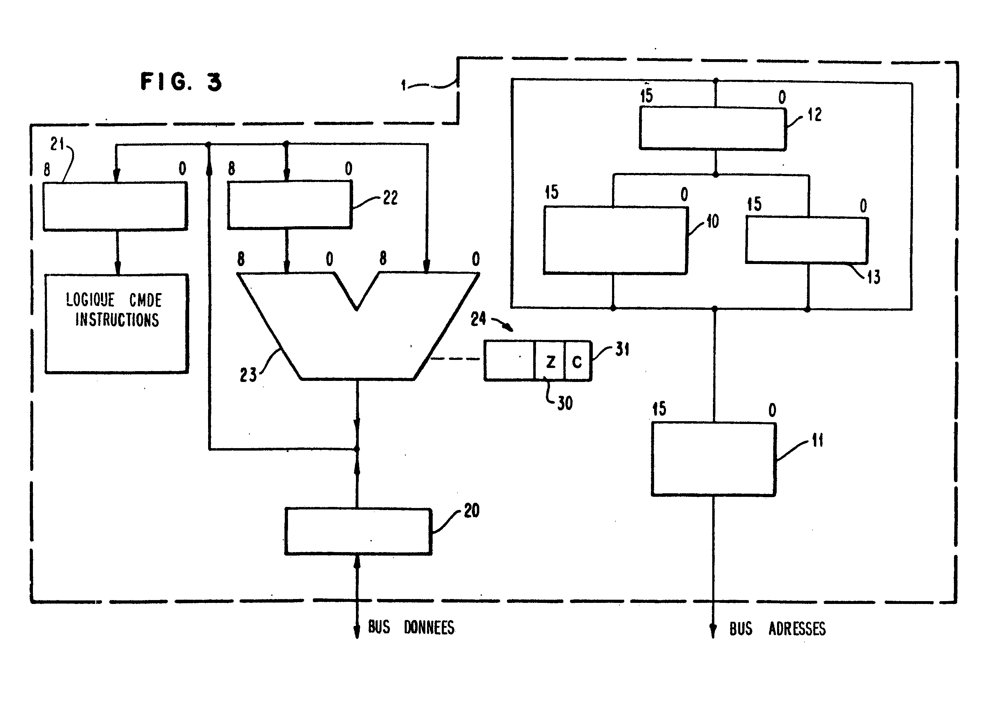

Les données lues ou écrites dans la mémoire 3 sont conservées provisoirement dans les registres (SDR) 6 et 7 respectivement associés aux processeurs 1 et 2 et contenus dans ces derniers. Les processeurs 1 et 2 sont capables d'exécuter diverses instructions et peuvent contenir un nombre de registres supérieur à celui représenté sur les figure mais seuls les registres nécessaires aux fins de la mise en oeuvre de la présente invention ont été représentés de façon détaillée. Le registre de travail (WR) 22 représenté sur la Figure 3 peut, par exemple, n'être que l'un des huit registres que comporte un ensemble associée à un niveau d'interruption spécifique dans un processeur donné.

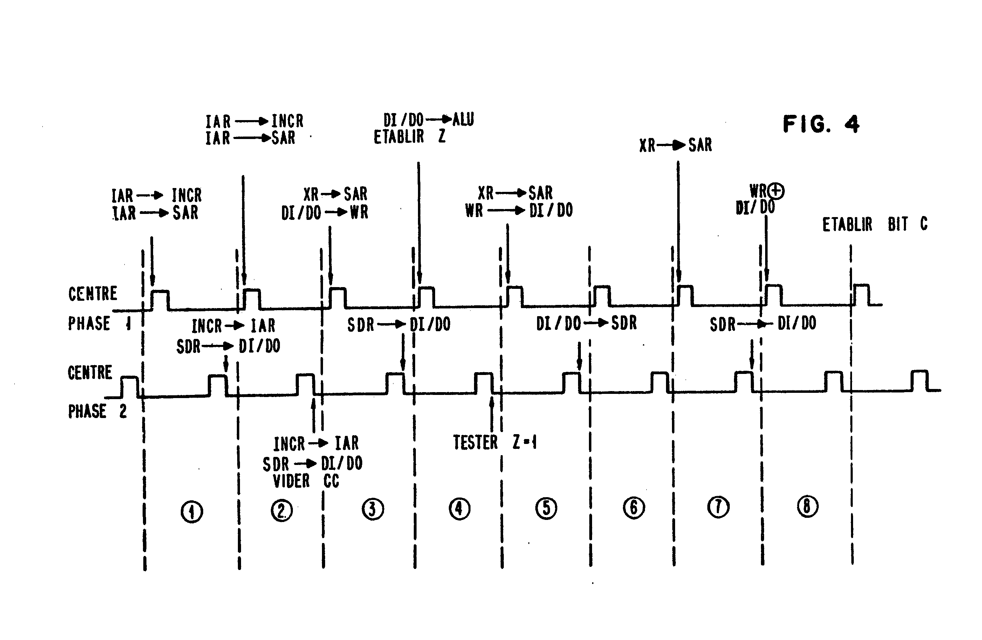

La Figure 4 représente un diagramme des temps afférent à une méthode de test et positionnement ou de verrouillage montrant ce qui se passe pendant chaque phase de chacun des cycles du signal d'horloge. La Figure 4 doit être utilisée en conjonction avec les Figures 1, 2 et 3 afin de mieux comprende la description ci-après.

La Figure 3 représente de façon plus détaillée le processeur 1. Lorsqu'un processeur désire utiliser de façon exclusive une ressource commune, il doit d'abord charger l'adresse du "Multiplet de demande de ressource" dans le registre d'index (XR) 13. Une convention est ici adoptée, en vertu de laquelle, si la ressource désirée est disponible, le contenu de la position de mémoire adressée par le registre 13 contient la valeur "0". L'adresse de cette partie de la mémoire est établie par le programme lors du codage des instructions. Si la ressource n'est pas disponible ou si un autre processeur est en train de l'utiliser, la position de mémoire adressée par le registre 13 contient un code d'identification affecté au processeur particulier qui est alors en train d'utiliser la ressource. Le fonctionnement du processeur 1 nécessite l'exécution de deux des multiplets de l'instruction de test et de positionnement, qui sont identifiés comme suit:

multiplet 1: code opération "test et positionnement".

multiplet 2: code d'identification de processeur, à une valeur différente de "0". Ce code peut être constitué par un nombre entier quelconque de 1 à 255. Il est défini par convention et déterminé lors du codage de l'instruction.

Le premier cycle du signal d'horloge pendant lequel la technique d'accès doit être employée est utilisé comme cycle d'accès pendant lequel le code opération est lu dans la mémoire en fonction du contenu du registre d'adresse d'instruction (IAR) 10 de la Figure 3 pour commander le fonctionnement du processeur. Ce résultat est obtenu en transférant initialement le contenu du registre 10 au registre d'adresse de mémoire (SAR) 11 pendant la phase 1, par exemple, au centre de la phase 1 d'un cycle du signal d'horloge. L'adresse est une position de départ de la mémoire qui est décalée de N multiplets par rapport à une position de départ arbitraire quelconque M initialement fixée lors de la mise sous tension, (par exemple la position zéro). L'adresse présente dans le registre 11 est transmise à la mémoire par l'intermédiaire du bus d'adresses et permet d'accéder au code opération qui doit être utilisé. Par l'intermédiaire du bus de données mémoires, les données (Code opération) se trouvant à la position de mémoire accédée, sont chargées dans le registre de données de mémoire 6. Dans le même temps, le contenu du registre 10 est transféré à un registre d'incrémentation (INCR) 12 et, pendant la phase 2 du premier cycle du signal d'horloge, le contenu de ce dernier registre est transféré, au registre 10 faisant ainsi passer son contenu à l'adresse de la position de mémoire suivante qui contient le code identifiant le processeur.

Pendant la phase 2 du premier cycle du signal d'horloge, le contenu du registre de données de mémoire 6 de la Figure 1 est transféré par le bus de données au registre de données entrantes/données sortantes (DI/DO) 20 de la Figure 3. Ce dernier contient alors le code opération relatif au verrouillage ou à l'instruction de test et positionnement. Pendant la première phase du second cycle, le contenu du registre 20 est transféré au registre d'instruction 21, comme le montre la Figure 3. Le second cycle du signal d'horloge permet d'obtenir le code identifiant le processeur particulier qui demande à utiliser une ressource donnée. Ce résultat est obtenu en transférant le contenu du registre 10 au registre 11 afin de présenter à la mémoire l'adresse du code identifiant ce processeur. (Dans le même temps, le contenu du registre 10 est transféré au registre d'incrementation 12 afin de la faire passer à la valeur correspondant à l'instruction suivante). Pendant la phase 2 de ce second cycle, le contenu du registre 12 est transféré au registre 10, augmentant ainsi la valeur de l'adresse l'instruction d'une unité. Pendant cette même phase 2, le contenu du registre de données de mémoire 6 (ou 7) associé au processeur 1 (ou 2), qui contient maintenant le code identifiant le processeur, est transféré au registre de données 20. Toujours pendant cette phase 2 du second cycle, les codes condition provenant d'un registre de codes condition (CC) 24 sont remis à zéro.

Il est à noter que deux codes condition seulement, désignés Z et C sur la Figure 3, sont autorisés dans le cadre de la présente invention. Ces deux codes sont respectivement contenus dans les parties 30 et 31 du registre 24. Si le code Z est mis à "1", cela indique que toutes les sorties de l'unité arithmétique et logique (ALU) 23 sont composées de "0", cela étant le résultat d'une certaine opération logique. Si le code C est mis à "1", cela indique que les deux entrées appliquées à l'ALU 23 aux fins d'une comparaison ont la même valeur. Le code C est utilisé dans une instruction de verrouillage ou de test et positionnement pour indiquer si la ressource demandée est disponible ou non. Ce code C est mis à "1" si la ressource est disponible et à "0" si elle n'est pas disponible ou si un autre processeur est actuellement en train de l'utiliser.

Le troisième cycle du signal d'horloge permet d'obtenir un multiplet de commande de ressource afférent à la ressource à laquelle on désire accéder, et un test peut donc être effectué pour déterminer sa disponibilité. Il est souhaitable que le nombre de ressources communes soit important afin de titer le meilleur parti de l'invention. Ce résultat peut être obtenu, ainsi qu'on l'a précédemment indiqué, par l'intermédiaire de l'adresse du multiplet de commande de ressource qui peut être chargée dans le registre d'index 13 avant l'exécution de la commande d'accès présentée comme une instruction de test et positionnement.

Pendant la phase 1 du troisième cycle du signal d'horloge le contenu du registre 13 est chargé dans le registre 11 et l'on accède à l'adresse du multiplet de commande de ressource dans la mémoire. Dans le même temps, le contenu du registre de données 20 (qui est alors le code d'identification de processeur) est transféré au registre de travail 22 étant donné que, pendant la phase 2 de ce troisième cycle, le multiplet de commande de ressource contenu dans le registre de données 6, par exemple, sera chargé dans le registre 20.

Le quatrième cycle du signal d'horloge est utilisé pour déterminer si une ressource donnée est actuellement disponible. Selon la convention ici adoptée, la ressource désirée est disponible si le multiplet de commande de ressource est entièrement composé de zéros. Ainsi, pendant la phase 1 du quatrième cycle du signal d'horloge, le contenu du registre 20 est présenté à l'unité ALU 23 et le code Z contenu dans le registre 24 est mis à la valeur correspondant à celle dudit multiplet selon l'explication ci-dessus. Pendant la phase 2 de ce cycle, un test est effectué pour déterminer la valeur du code Z contenu dans le registre 24: si cette valeur est "0", cela signifie que la valeur dudit multiplet était différente de "0" et que la ressource n'est pas disponible, l'instruction prenant alors fin. L'indisponibilité de la ressource est indiquée par le fait que le code C contenu dans la partie 31 du registre 24 est à la valeur "0".

Si le code Z est à la valeur 1, cela signifie que la ressource est actuellement disponible, et le processeur qui a demandé à l'utiliser par l'intermédiaire de son instruction de test et positionnement peut alors chercher à accéder à ladite ressource. Le processeur peut parvenir à ce résultat en écrivant dans le multiplet de commande de ressource son code d'identification particulier qui a été obtenue pendant la phase 2 du cycle 5. Un test sera effectué ultérieurement, pendant le cycle 8, pour déterminer si la demande, d'accès à la ressource désirée a été acceptée.

Cependant, afin d'éviter les conflits, des cycles supplémentaires du signal fourni par l'horloge 4 sont nécessaires aux fins d'autres opérations, ainsi qu'il est indiqué ciaprès.

Pendant la phase 1 du cycle 5, le code identifiant le processeur spécifique dont il s'agit et qui est contenu dans le registre 22 est transféré au registre 20. Le contenu du registre d'index 13, qui précise l'emplacement du multiplet de commande de ressource, est transféré au registre 11. Pendant la phase 2 du cycle 5, le contenu du registre 20 est transféré au registre de données 6 de la Figure 1, (afférent au processeur 1). Dans le même temps, le contenu du registre de données est également écrit dans la mémoire à accès sélectif 3.

Pendant le cycle 6, aucune opération n'est effectuée par le processeur 1, et de ce fait un cycle d'attente ou un cycle fictif de lecture est prévu pour ménager un regard de durée fixe, pendant lequel un autre processeur pourra demander à accéder à la même ressource et pendant lequel également sa demande pourra être comparée avec le contenu actual du registre 24.

On trouvera ci-après à titre d'exemple une description, cycle par cycle, du fonctionnement de l'invention. Cette description est illustrée par la Figure 4, sur laquelle les différents cycles sont représentés par des chiffres entourés d'un cercle.

L'instruction de test et positionnement commence au cycle 1 par le chargement dans le registre d'instructions du code opération afférent à un type d'instruction donné ou à un processeur donné. Pendant la phase 1 du cycle 1, on obtient l'adresse de l'emplacement de mémoire qui contient l'instruction. Pendant la phase 2, le code opération qui se trouve à cet emplacement est lu dans la mémoire et chargé dans le registre de données entrantes/données sortantes, pour être transféré pendant le cycle suivant au registre d'instructions. Pendant ce même cycle, on fair passer l'adresse de l'instruction à l'emplacement de mémoire suivant en incrémentant sa valeur.

Pendant le cycle 2, la valeur ainsi incrémentée et qui se trouve dans le registre d'adresse d'instructions est utilisée pour extraire le code d'identification du processeur de l'emplacement de mémoire suivante. A cette fin, ladite valeur est transmise à la mémoire et l'on accédere ensuite à l'emplacement de cette dernière qui contient le code d'identification du processeur. Pendant la phase 2 de ce même cycle, le multiplet constituant ce code est chargé dans le registre de données entrantes/données sortantes.

Le cycle 3 permet d'obtenir l'adresse dans la mémoire, du multiplet de commande de ressource. Dans un but de simplicité, on suppose dans le présent exemple que l'adresse de ce multiplet a précédemment été chargée dans le registre d'index du processeur. En faisant en sorte que le positionnement de cette adresse fasse partie de l'instruction de test et positionnement, on ne fait qu'augmenter le nombre total de cycles du signal d'horloge dans la séquence d'instructions, sans pour autant affecter le caractère original de l'instruction elle-même.

Pendant la phase 1 du cycle 3, on obtient l'adresse de l'emplacement de mémoire qui contient le multiplet de commande de ressource. Pendant la phase 2 de ce même cycle, ce multiplet est transféré de la mémoire au registre de données entrantes/données sortantes du processeur.

Le cycle 4 ne nécessite aucune opération de lecture ou d'écriture dans la mémoire. Toutefois, on procède à un test de la valeur du multiplet de commande de ressource précédemment lu. Pendant la phase 1 du cycle 4, ce multiplet est transmit à l'unité arithmétique et logique (ALU), et pendant la phase 2 le bit Z prend une valeur qui est fonction de celle du multiplet. Si cette dernière est "0", le bit Z est mis à la valeur logique "1", et si la valeur du multiplet est différente de "0", le bit Z est mis à la valeur logique "0".

Si la valeur du multiplet testée pendant le cycle 4 est différente de "0", on commencera l'exécution d'une nouvelle séquence d'instructions pendant le cycle suivant en transférant à la mémoire le contenu du registre d'adresse d'instructions de manière à accéder à l'instruction suivante. Une valeur différente de "0" dudit multiplet indique que la ressource désirée est actuellement utilisée par un autre processeur. Ainsi qu'on le verra plus loin, cette étape permet de résoudre le conflit qui peut exister entre différents processeurs qui désirent accéder à une même ressource.

Si la ressource désirée est disponible, on charge, pendant le cycle 5, le multiplet d'identification de processeur obtenu pendant le cycle 2 dans l'emplacement de mémoire qu'occupe le multiplet de commande de ressource. Pendant la phase 1 du cycle 5, l'adresse de ce dernier multiplet est transmise à la mémoire depuis le registre d'index du processeur. Pendant la phase 2 du cycle 5, le multiplet d'identification de processeur est transféré à l'adresse du multiplet de commande de ressource dans la mémoire.

Dans le présent exemple, le cycle 6 permet de prolonger la durée de l'exécution d'une instruction. Ce cycle, pendant lequel aucune opération de lecture ou d'écriture afférente au multiplet de commande de ressource n'est effectuée, permet d'avoir la certitude que la durée de l'exécution d'une deuxième séquence d'accès à une ressource est égale ou supérieure à la durée d'exécution d'une première séquence. Le rapport chronologique ainsi établi constitue un aspect essentiel de l'originalité de l'instruction de test et positionnement ici décrite.

Cette exigence est due au fait qu'il est nécessaire de résoudre le conflit qui existe lorsque les deux processeurs qui désirent utiliser une même ressource exécutent simultanément leurs séquences d'instructions respectives. Par exemple, si le second processeur commence l'exécution de son instruction de test et positionnement pendant la phase 2 du cycle 2, pendant laquelle le premier processeur est déjà en train d'exécuter cette instruction, un conflit se produit. En pareil cas, chacun des deux processeurs peut déterminer la valeur de son bit Z et obtenir une comparaison aboutissant à la conclusion erronée qu'il peut utiliser la ressource désirée, alors que cette dernière a effectivement été mise à la disposition de l'autre processeur. Cela peut se produire étant donné que la seconde séquence de lecture du multiplet de commande par le premier processeur a lieu avant une séquence d'écriture de ce multiplet effectuée par le second processeur. L'algorithme général applicable permettrait en pareil cas aux deux processeurs d'avoir accès à une même ressource, ce qui est absolument inadmissible.

Pendant le cycle 7, le contenu du registre dans lequel se trouve le multiplet de commande de ressource est de nouveau lu depuis la mémoire. Pendant la phase 1 du cycle 7, le contenu du registre d'index dans lequel se trouve l'adresse de ce multiplet de commande est chargé dans le registre d'adresse de mémoire 11 et, de ce fait, l'on accède à la mémoire 3. Le contenu de cette dernière est alors chargé dans le registre de données 20.

Pendant la phase 1 du cycle 7, le registre de travail 22 contient le code d'identification de processeur et le registre de données 20 contient le multiplet de commande de ressource. Ce dernier est transféré, de même que le code d'identification, à l'unité ALU 23 et une comparaison est effectuée pendant la phase 1 du cycle 8. Si le résultat de cette comparaison est une égalité, le code condition présent dans la partie 31 du registre 24 est mis à "1" pour indiquer que la ressource est disponible. Si le résultat de la comparaison est une inégalité, le code condition est mis à "0" pour indiquer que la ressource n'est pas disponible. Ce dernier cas se produira chaque fois qu'un autre processeur aura été autorisé à accéder à la ressource désirée par suite d'une coïncidence fortuite de sa demande.

La disponibilité de la ressource demandée est déterminée par l'intermédiaire d'une opération ou d'une instruction de branchement conditionnel qui fait suite à l'instruction de test et positionnement et qui réside dans la mémoire, compte tenu du code condition présent dans la partie 31 du registre 24. Si l'accès à la ressource désirée a été obtenu, le processeur qui a demandé cet accès procèdera, après utilisation de ladite ressource, à la remise à "0" du multiplet de commande.

Le procédé décrit ci-dessus, qui permet de résoudre les conflits et de commander l'accès à une ressource commune, peut être appliqué à des systèmes comportant plus de deux processeurs. En particulier, le présente procédé trouve une application directe chaque fois que le nombre de processeurs n est un nombre entier pair et que des paires de processeurs reçoivent des signaux d'horloge constitués par des cycles à phases complémentaires, chaque paire recevant un cycle d'horloge indépendamment des autres et aucun processeur ou aucune paire de processeurs ne recevant plus d'un cycle d'horloge avant que chacun des autres processeurs ait reçu un cycle d'horloge. Des portes logiques (ou des moyens analogues) conectés à un compteur séquentiel afin de transférer les cycles d'horloge nécessaires aux différentes paires de processeurs, peuvent aisément être réalisées à cette fin. Si le système comporte un nombre impair de processeurs, le présent procédé s'applique de la même façon que dans le case d'un nombre pair de processeurs, mais une fois que des cycles de signaux d'horloge ont été appliqués à des paires de processeurs, il est nécessaire qu'un cycle d'horloge distinct soit prévu pour le processeur restant avant que les autres processeurs n'aient reçu leur second cycle d'horloge ou leurs cycles d'horloge ultérieurs.

Dans les exemples cités, l'instruction de test et positionnement limiterait, en pratique, le nombre de processeurs susceptibles d'être employés dans le système à 255, compte tenu du fait que les instructions de ce type exigent des codes distincts composés d'un octet, ce qui permet de définir au maximum 256 codes distincts pour identifier les différents processeurs.

Les instructions en langage machine qui commandent les diverses opérations de lecture et d'écriture ainsi que le chargement et le déchargement des différents registres à destination des diverses positions ou depuis celles-ci sont fonction du type particulier de processeur utilisé. La préparation de ces instructions ne présentera aucune difficulté pour l'homme de l'art. Compte tenu, en particulier, des conditions à remplir pour la mise en oeuvre de l'invention, selon les Figures 3 et 4, il n'y a pas lieu de fournir ici une liste détaillée d'instructions sous la forme de microcodes, l'homme de l'art pouvant aisément écrire les séquences nécessaires pour provoquer le chargement et le déchargement désirés des divers registres représentés sur ces figures.

Néanmoins, on a représenté sur la Figure 4, pour faciliter la compréhension des instructions spécifiques nécessaires, quelques indications relatives aux opérations qui ont lieu pendant chaque cycle du signal d'horloge.

**Revendications**

1. Procédé de commande de l'affectation d'une ressource à un processeur dans un système comportant N processeurs (1, 2) indépendants divisés en N/2 groupes de deux processeurs, si N est pair et en N+1/2 groupes comprenant des groupes de deux processeurs et un groupe à un seul processeur si N est impair, disposant de ressources communes (3) pouvant être utilisées par chacun des processeurs, et une horloge commune (4) pour fournir séquentiellement auxdits groupes des signaux d'horloge à phases complémentaires de telle sorte que la première phase d'un cycle correspond pour un processeur dans un groupe à la phase d'exécution de données et pour l'autre processeur à la phase d'accès de données, les phases d'exécution et d'accès étant inversées pour chacun des deux processeurs lors de la seconde phase du cyle, ledit système comprenant également des moyens de commande (5, 1, 2) permettant à chaque processeur l'utilisation exclusive d'une ressource, lesdits moyens de commande comportant un registre de commande (via 13) associé à chaque ressource pour emmagasiner l'indication de la disponibilité de chaque ressource ledit procédé comportant les étapes suivantes: accéder aux bits de commande contenus dans le registre de commande associé à la ressource demandée, lesdits bits définissant la disponibilité de ladite ressource, examiner le contenu du registre de commande afin de déterminer s'il indique que ladite ressource est disponible, charger ledit registre de commande par un code numérique affecté de façon exclusive au processeur demandeur qui désire utiliser ladite ressource si cette dernière est disponible et utiliser ladite ressource jusqu'à ce que la tâche désirée ait été exécutée, et à mettre ensuite le contenu dudit registre de commande à une valeur indiquant que ladite ressource est à la disposition d'autres processeurs; ledit procédé étant caractérisé en ce qu'après que le code numérique affecté au processeur désirant utiliser ladite ressource ait été chargé dans ledit registre de commande, on attend que l'un des cycles du signal d'horloge ait pris fin sans qu'aucune opération destinée à permettre audit processeur d'accéder à ladite ressource ait été effectué, cycle pendant lequel l'autre processeur du groupe pourrait avoir modifié le contenu dudit registre de commande, cette éventualité étant vérifiée en comparant ledit code numérique exclusive-

ment affecté au processeur demandeur avec le contenu dudit registre de commande pendant le cycle du signal d'horloge appliqué audit processeur demandeur qui fait suite audit cycle d'attente, l'accès à ladite ressource étant permis audit processeur demandeur seulement si la comparaison indique une égalité.

2. Procédé selon la revendication 1, caractérisé en ce que dans le cas où le nombre N de processeurs est pair, les cycles d'horloge définis par les signaux d'horloge à phases complémentaires sont appliqués séquentiellement par paires de processeurs, aucune paire de processeurs ne pouvant recevoir le cycle d'horloge suivant avant que toute pair du système ait reçu un cycle d'horloge.

3. Procédé selon la revendications 1 caractérisé en ce que, dans la cas où N est un nombre impair, les cycles d'horloge définis par les signaux d'horloge à phases complémentaires sont appliqués séquentiellement par paires de processeurs jusqu'à ce qu'un seul cycle d'horloge soit appliqué au dernier processeur restant avant d'appliquer les cycles d'horloge suivants aux processeurs du système.

## Patentansprüche

1. Steuerungsverfahren zur Zuteilung eines Mittels zu einem Rechner in einem System mit N unabhaengigen Rechnern (1, 2), die in N/2 Grupper mit jeweils zwei Rechnern, wenn N eine gerade Zahl ist, und in N+1/2 Gruppen mit Gruppen mit zwei Rechnern und einer Gruppe mit einem einzigen Rechner eingeteilt sind, wenn N eine ungerade Zahl ist, das gemeinsame zur Verfeugung fuer jeden Rechner stehende Mittel (3) und einen gemeinsamen Taktgeber (4) aufweist, der sequentielle Taktsignalen mit Ergaenzungsphasen zu den Grupper so sendet, dass bei einem einer Gruppe zugeordneten Rechner die erste Phase eines Zyklus der Phase fuer die Datenausfuehrung entspricht, waehrend sie bei dem anderen der selben Gruppe zugehoerigen Rechner des Phase duer den Datenzugriff entspricht, wobei die jeweiligen Phasen fuer die Datenausfuehrung und den Datenzugriff bei jedem der zwei Rechner waehrend der zweiten Taktphase umgekehrt sind, wo das genannte System auch Steuermittel (5, 1, 2) aufweist, die fuer jeden Rechner die exklusive Verwendung eines Mittels gestatten, wobei die Steuermittel ein mit jedem Mittel verbundenes Steuerregister (via 13) zur Speicherung der Anmeldung des verfeugbaren Mittels aufweisen, wo das genannte Verfahren aus den folgenden Schritten besteht: Zugriff zu den in dem mit dem aufgerufenen Mittel verbundenen Steuerregister beinhaltenen Steuerbits, wobei die Steuerbits auf die Verfeugbarkeit des Mittels hinweisen. Auswertung des Inhalts des Steuermittels, um festzustellen, ob er auf die Verfeugbarkeit des Mittels hinweist. Ladung des Steuerregisters mittels einer digitalen Kode, die exklusiv dem beanspruchenden Rechner zugeordnet ist, der das Mittel zu bedienen wuenscht, wenn dieses verfuegbar ist, Bedienung des Mittels bis Ausfuehrung der Aufgabe und Zuteilung eines Wertes zu dem Inhalt des Steuerregisters, der darauf hinweist, dass das Mittel zur Verfeugung fuer andere Rechner steht, wobei das Verfahren dadurch gekennzeichnet ist, dass man nach der Uebertragung der digitalen dem beanspruchenden Rechner zugeordneten Kode zu dem Steuerregister wartet, bis ein Zykus des Taktsignals vollendet wird, ohne dass irgendein Vorgang, der dem Rechner Zugriff zu dem Mittel ermoeglicht, ausgefuehrt wird, als der Inhalt des Steuerrechners waehrend dem Zyklus von einem anderen der Gruppe zugehoerigen Rechner geaendert werden koennte, wobei diese Moeglichkeit durch Vergleich des dem Inhalt des beanspruchenden Rechners exklusiv zugeordneten Werts mit dem Inhalt des Steuerregisters waehrend dem Zyklus des Taktsignals bestaetigt wird, der zu dem beanspruchenden auf die Wartezeit folgenden Rechner zugefuehrt ist, wobei der beanspruchende Rechner zu dem Mittel nur zugreifen kann, wenn der Vergleich Gleichmaessigkeit feststellt.

2. Verfahren nach Anspruch 1, dadurch gekennzeichnet, dass die von den Taktsignalen mit Ergaenzungsphasen definierten Zyklen, wenn die Zahl N von Rechnern gerade ist, sequentiell zu Paare von Rechnern zugefuehrt werden, wobei das folgende Taktsignal zu keinem Paar von Rechnern zugefuehrt werden kann, ehe ein Taktsignal zu jedem Paar von Rechnert in dem Mehrrechnersystem zugefuehrt wird.

3. Verfahren nach Anspruch 1, dadurch gekennzeichnet, dass die von den Taktsignalen mit Ergaenzungsphasen definierten Zyklen, wenn die Zahrl N von Rechnern ungerade ist, sequentiell zu Paare von Rechnern zugefuehrt werden, bis ein einziger Zyklus zu dem letzten uebrigen Rechner zugefuehrt wird, ehe die folgenden Zyklen zu den Rechnern in dem Mehrrechnersystem zugefuehrt werden.

## Claims

1. A control method for allocating a resource to a processor in a system comprising N independent processors (1, 2) divided into N/2 two-processor groups, if N is even, and into N+1/2 groups comprising two-processor groups and one single-processor group, if N is odd, and having common resources (3) that can be used by each processor and a common clock (4) sequentially providing said groups with complementarily phased clock signals such that the first phase of a clock cycle corresponds, for one of the processor in any group, to the data processing phase and, for the other processor, to the data access phase, with said processing and access phases being inverted for each of said two processors during the second phase of the clock cycle, said system further comprising control means (5, 1, 2) giving each processor the exclusive use of a resource, said control means including a control register (via 13) associated with each resource for storing an indication of the availability of each resource, said method comprising the steps of: accessing the control bits in the control register associated with the desired resource, said control bits defining the availability of said resource, examining the contents of said control register to determine whether said resource is available, loading said control register with a unique digital code assigned to the processor which desires to use said resource, if said resource is available, using said resource until the desired task is completed, and then setting the contents of said control register to a value indicating that said resource is now available to other processors, said method being characterized in that, after the digital code assigned to the processor which desires to use said resource has been loaded into said control register, one waits for one of the signal clock cycles to pass with no operations involved in gaining access to said resource by said processor being performed, during which cycle the other processor in the group might have modified the contents of said control register, this being ascertained by comparing said unique digital code assigned to the requesting processor with the contents of said control register during the cycle of the signal clock applied to said requesting processor which follows said waiting cycle, with said requesting processor gaining access to said resource only if an equality is indicated.

2. A control method according to claim 1, characterized in that, when the number N of processors is even, the clock cycles defined by the complementarily phased clock signals are sequentially applied to pairs of processors with no pair of processors receiving the next clock cycle until each pair in the system has received a clock cycle.

3. A control means according to claim 1, characterized in that, where N is an odd number, the clock cycles defined by the complementarily phased clock signals are sequentially applied to pairs of processors until one single clock cycle is applied to the last processor before providing succeeding clock cycles to the processors in the system.

# FIG. 1

BUS DONNEES MEM

*3*

*8* *6* *7* *9*

L/E    BUS
       DONNEES 1

BUS
ADRESSES

L/E    BUS
       DONNEES
       *2*

*1*    *5*    *2*

BUS ADRESSES 1    BUS ADRESSES 2

PHASE
HORL. 1    PHASE HORL. 2

*4*

# FIG. 2

SIG. HORL.

CENTRE $\phi 1$

CENTRE $\phi 2$

PROC. 1    1 ADR

PROC. 1    1 L/E D

PROC. 2    2 ADR

PROC. 2    2 L/E D

ACCES MEM.
2L/E D   1 L/E D   2   2L/E D   1 L/E D   2   2L/E D   1 L/E D   2
1 ADR   2 ADR   1 ADR   2 ADR   1 ADR   2 ADR

2

**FIG. 3**

LOGIQUE CMDE INSTRUCTIONS

Z | C

BUS DONNEES

BUS ADRESSES

0029131

FIG. 4

# FIG. 5